# EUROPEAN PATENT APPLICATION

(11) **EP 3 816 581 A1**
(43) Date of publication of application: **05.05.2021**
(21) Application number: 19815118.5
(22) Date of filing: 07.06.2019
(51) Int. Cl.: G01C 21/26, G06Q 30/02, G06Q 50/10

(54) **SERVICE PROVIDING DEVICE, SERVICE PROVIDING METHOD, AND SERVICE PROVIDING PROGRAM**

(30) Priority: 07.06.2018 JP 2018109115
(71) Applicant: Dentsu Inc., Tokyo 105-7001 (JP)
(72) Inventor: SO, Hakubun, Tokyo 105-7001 (JP)
(74) Representative: EIP
(86) International application number: PCT/JP2019/022672
(87) International publication number: WO 2019/235605

(57) **Abstract**

An object of the present invention is to provide a service providing device, a service providing method, and a service providing program capable of efficiently providing services such as advertisements and contents.

Provided is a service providing device including: a route information receiving means that receives route information indicative of respective moving route of each of plurality of moving units each of which includes auto operation function; a position information receiving means that receives position information indicative of current position of each of the plurality of moving units; and a service providing means that, when a service providing condition is satisfied by the route information from two or more moving units among the plurality of moving units, provides a service to users of the two or more moving units based on the rout information and the position information.

## Description

### TECHNICAL FIELD

The present invention relates to a service providing device, a service providing method, and a service providing program for providing a service using route information of a plurality of moving units.

### BACKGROUND ART

Currently, as a method of realizing automatic operation of moving units, development of control technology of automatic driving suitable for aircraft, ships, automobiles, drones and other moving units, and development of communication, broadcasting and other control technology related to the control of these moving units are under way. In order to provide these mobile objects to users as a business, a method of distributing information such as advertisements and contents to secure a transportation fee with revenue obtained as a consideration for the distribution has been considered. However, in order to optimally distribute advertisements in accordance with uneven moving demand, not only information such as passenger attributes and moving destinations, but also a mechanism for managing the extent and scale of distribution of advertisements and for receiving and distributing advertisements from advertisers is required. At this time, information is required to be provided in combination with existing advertisement submission conditions or in accordance with various moving conditions of passengers. It is inefficient for individual mobile administrators and operators to perform these processes.

There has been proposed a service in which the taxi fee becomes free by viewing the advertisement. However, it is not clear how to advertise specifically, and the advertising suitable for the user may not be displayed. For this reason, for the advertiser, there is a risk that the advertiser may not be able to issue the advertisement efficiently in consideration of the movement tendency of the entire regional space exceeding the unit of the individual moving unit or the transportation service provider.

### PRIOR ART DOCUMENTS

### PATENT LITERATURES

[Patent Literature 1] JP6,362,647B

### NON-PATENT LITERATURES

[Non-Patent Literature 1] https://nommoc.jp/

### SUMMARY OF THE INVENTION

### PROBLEM TO BE SOLVED BY THE INVENTION

The present invention has been made in view of such problems, and an object of the present invention is to provide a service providing device, a service providing method, and a service providing program capable of efficiently providing services such as advertisements and contents.

### MEANS FOR SOLVING THE PROBLEMS

According to one embodiment of the present invention, provided is a service providing device comprising: a route information receiving means that receives route information indicative of respective moving route of each of plurality of moving units each of which comprises auto operation function; a position information receiving means that receives position information indicative of current position of each of the plurality of moving units; and a service providing means that, when a service providing condition is satisfied by the route information from two or more moving units among the plurality of moving units, provides a service to users of the two or more moving units based on the rout information and the position information.

Since the service is provided when the service providing condition is satisfied by the route information from two or more moving units among the plurality of moving units, the efficiency for providing the service improves. Here, the moving unit is a vehicle with auto driving ability, for example. The service is providing an advertisement, a content, and a coupon, for example.

The service providing condition may be that the moving route of the moving units includes a predetermined certain point.

The service providing means may provide the service, based on the position information, at a timing when the moving units enter a range defined by the certain point.

The service providing means may provide, as the service, an advertisement relating to a shop relating to the certain point, or a coupon available at a shop relating to the certain point.

The service providing means may provide the service utilizing a player device viewable from the moving units at the certain point, the player device being located near the certain point.

The service providing condition may be that a number of the moving units whose moving route includes the certain point is equal to or more than a predetermined number.

The service providing condition may relate to a moving time in the moving route or a moving distance in the moving route, and the service providing means may provide a service dependent on the moving time or the moving distance.

The service providing condition may be that two or more moving units have a common destination.

The service providing condition may relate to a number and/or an attribute information of users using the moving units.

The service provided by the service providing means may be playing a content, and the service providing means may cause the content to be played by sending the content to a user terminal used by the user.

The service provided by the service providing means may be playing a content, and the service providing means may cause the content stored in a user terminal in advance to be played by sending a playing command to the user terminal used by the user.

According to another embodiment of the present invention, provided is a service providing method comprising: by a route information receiving means, receiving route information indicative of respective moving route of each of plurality of moving units each of which comprises auto operation function; by a position information receiving means, receiving position information indicative of current position of each of the plurality of moving units; and by a service providing means, when a service providing condition is satisfied by the route information from two or more moving units among the plurality of moving units, providing a service to users of the two or more moving units based on the rout information and the position information.

According to another embodiment of the present invention, provided is a service providing program causing a computer to function as a route information receiving means that receives route information indicative of respective moving route of each of plurality of moving units each of which comprises auto operation function; a position information receiving means that receives position information indicative of current position of each of the plurality of moving units; and a service providing means that, when a service providing condition is satisfied by the route information from two or more moving units among the plurality of moving units, provide a service to users of the two or more moving units based on the rout information and the position information.

According to another embodiment of the present invention, provided is a a computing device comprising: a means that receives route information indicative of respective moving route of each of plurality of moving units each of which comprises auto operation function; a means that evaluates a certain area on a geographic space based on multiplication with attribute information and a certain time etc. by collecting attribute information of eachmoving route; and a means that instruct advertisement display by evaluating each geographic space to utilize the each geographic space as an advertisement medium.

The attribute information may include information regarding, for each moving route, a number of people in the moving unit, what kind of person with what reason in the moving unit.

### EFFECT OF THE INVENTION

Since the service is provided when the service provision condition is satisfied by route information from two or more of the plurality of moving units, the service provision efficiency is improved. In addition, since optimum information can be distributed based on dynamic movement information of a plurality of moving units, efficient information is provided.

### BRIEF DESCRIPTION OF THE DRAWINGS

FIG. 1 is a block diagram showing a schematic configuration of a service providing system;
FIG. 2 is a block diagram showing a schematic configuration of a user terminal 1;
FIG. 3 is a block diagram showing a schematic configuration of a service providing device 2;
FIG. 4 is a diagram showing an example of a service DB stored in a service storage means 25;
FIG. 5 is a flowchart illustrating an exemplary process operation of a service providing device 2;
FIG. 6 is a diagram for explaining the concept of the present technology;
FIG. 7 is a diagram schematically showing an example of a use case of the present technology;
FIG. 8 is a diagram schematically showing another example of a use case of the present technology;
FIG. 9 is a still another diagram schematically illustrating another example of the use case of the present technology;
FIG. 10 is a schematic diagram illustrating mechanism of collaborating with digital signage works in conjunction.

### EMBODIMENT FOR IMPLEMENTING THE INVENTION

As a representative example of the present invention, a system is disclosed that provides a mechanism for efficiently distributing advertising and content suitable for the driving route and area of an autonomous driving vehicle. In this system, the advertiser and the passenger of the automatic driving vehicle are matched in accordance with the driving route area based on the attribute information of the automatic driving vehicle or passenger moving route, the characteristics of the driving route, the mass media and other advertisement development in the driving route area, and the reaction state, to distribute the optimum advertisement or content.

Hereinafter, embodiments of the present invention will be described in detail with reference to the drawings.

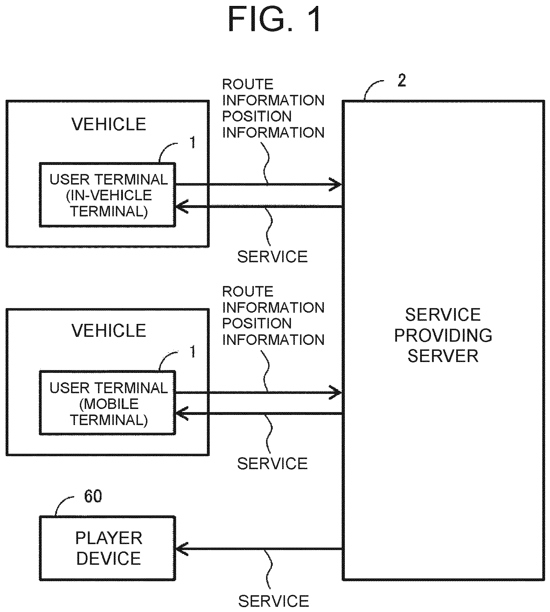

FIG. 1 is a diagram showing a schematic configuration of a service providing system. The service providing system includes a user terminal 1, a service providing device 2, and a player device 60, which can communicate with each other. The user terminal 1 is used by a user who rides on a vehicle having an auto-driving function (e.g., SAE-J3016 level 3 or higher), and may be a in-vehicle terminal (e.g., car navigation) mounted on the vehicle, oraportable terminal (e.g., smartphone or tablet) brought in by the user. The user terminal 1 sends route and position information to the service providing device 2, which will be described later. The service providing device 2 then provides services in accordance with the route information and the position information to the user via the user terminal 1 or any player device 60.

It is possible to assume that user terminal 1 is not only in vehicle, but also in a ship (moving unit operating underwater/on water), drone, or other airborne body with an auto operation function, but all of the following are described as vehicle.

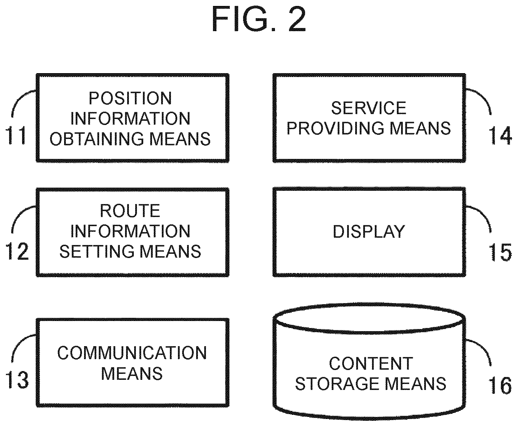

FIG. 2 is a diagram showing a schematic configuration of the user terminal 1. The user terminal 1 includes a position information obtaining means 11, a route information setting means 12, a communication means 13, a service providing means 14, a display 15, and a content storage means 16. At least a part of the functions of user terminal 1 may be realized by a processor of the user terminal 1 executing predetermined programs.

The position information obtaining means 11 obtains the current position of the user terminal 1 and sequentially generates position information indicating the current position. As a specific example, the position information obtaining means 11 has a GPS receiver, and the current position (latitude and longitude) of user terminal 1 can be obtained from the positioning satellites and the like. Since the user terminal 1 is used by the user on vehicle, the current position of the user terminal 1 can be said to be the current position of vehicle. The position information may include, in addition to the current position, an ID that identifies vehicle, an ID that identifies the user, and information that indicates the acquisition time of the current position.

Incidentally, equipped with a sensor device such as an in-vehicle camera (not shown) to vehicle, the position information obtaining means 11, by detecting the license plate of the other vehicle, may generate the position information indicating the current position of other vehicles.

The route information setting means 12 sets moving route of vehicle and generates route information indicating the moving route. The route information may include information such as an ID that identifies vehicle, an ID that identifies the user, a departure point, a transit point, a destination, and the like. The departure point, the transit point, and the destination may be arbitrarily set by the user of vehicle, or may be set in advance for vehicle. Alternatively, the current position acquired by the position information obtaining means 11 may be used as the departure. The route information may include other information such as the number of users who use vehicle, attributes such as sex and age, the purpose of movement, time required for movement, and the like.

The communication means 13 sends the position information to the service providing device 2 when the position information obtaining means 11 generates a position information. When the route information is generated by route information setting means 12, the communication means 13 transmits the route information to service providing device 2 . Note that while the position information is transmitted sequentially, the route information may be transmitted when it is newly set or updated. In addition, the communication means 13 receives from the service providing device 2 data required to provide service to the user.

The service providing means 14 provides services to the user based on the data received from the service providing device 2. As a specific example, the service providing means 14 receives predetermined content from the service providing device 2, and displays the content on display 15. Alternatively, the service providing means 14 refers to a content storage means 16 in which the content is stored in advance, reads the content specified by the content providing server, to display the content on the display.

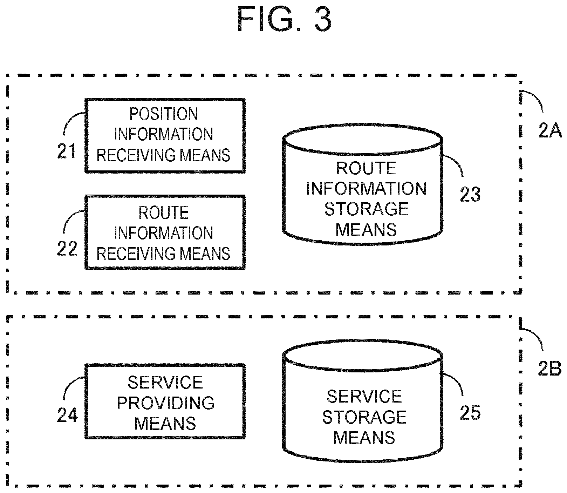

FIG. 3 is a diagram showing a schematic configuration of service providing device 2. The service providing device 2 includes a position information receiving means 21, a route information receiving means 22, a route information storage means 23, a service providing means 24, and a service storage means 25. Incidentally, at least a part of the functions of the service providing device 2 may be realized by the processor of the service providing device 2 executing a predetermined program. The service providing device 2 may also consist of a plurality of devices, for example, the position information receiving means 21, the route information receiving means 22 and the route information storage means 23 may be provided in one device (a route sharing server 2A) and the service providing means 24 and the service storage means 25 may be provided in another device (a service management server 2B).

The position information receiving means 21 receives a vehicle's current position information indicating the current position of each vehicle from the user terminal 1 used by the user on vehicle.

The route information receiving means 22 receives route information indicating moving route of each vehicle from the user terminal 1 used by the user on vehicle. Then, the route information receiving means 22 registers route information in the route information storage means 23. As a result, the moving routes of a plurality of vehicle can be shared (root sharing).

The service providing means 24 refers the route information storage means 23 and the service storage means 25 and, in accordance with the route information and the position information, provides services to vehicle users. Specifically, in the service storage means 25, the service provision conditions related to the moving route and the service contents associated with each other are stored as the service DB. Then, based on the route information stored in route information storage means 23, the service providing means 24 determines whether or not any of the service provision conditions is satisfied by two or more vehicle. If satisfied, the service providing means 24 provides the service associated with the service provision condition to a user of a vehicle satisfying the service provision condition.

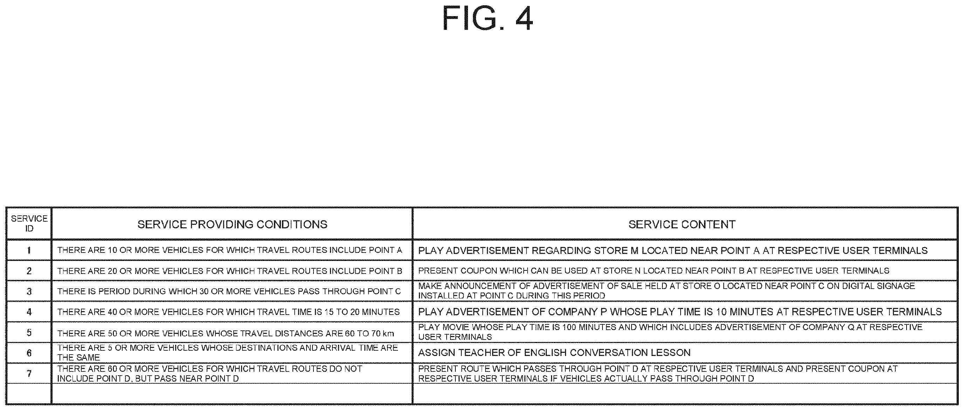

Figure 4 illustrates an example of the service DB stored in the service storage means 25. As described above, in the service DB, service providing conditions regarding a moving route are associated with service content.

As a service whose service ID is 1 (hereinafter, simply expressed as "service 1", or the like), played is an advertisement regarding a store M located near a point A at respective user terminals 1 of vehicles on condition that there are 10 or more vehicles for which moving routes include the point A. Note that the "moving routes include the point A" means, for example, that the route information includes the point A as a "transit point" or a "destination".

By this means, it is possible to efficiently provide an advertisement to vehicles which pass through the point A and guide users to the store M.

On condition that there are 20 or more vehicles for which moving routes include a point B, as a service 2, presented is a coupon which can be used at a store N located near the point B to respective user terminals 1 of said vehicles. The coupon can be presented by, for example, displaying a QR code (registered trademark) or a password.

By this means, it is possible to efficiently provide a coupon to vehicles which pass through the point B and guide users to the store N.

On condition that there is a period during which 30 or more vehicles pass through a point C, as a service 3, made is an announcement of an advertisement of a sale held at a store O located near the point C on a digital signage (corresponding to the player device 60 in Figure 1) (which is visible from vehicles located at the point C) installed at the point C during said period. Also in this case, it can be said that service is provided to users.

A normal digital signage typically displays the same advertisement (for example, store name and a distance to the store) in a fixed period. In contrast to this, according to service 3, it is possible to provide an advertisement efficiently and flexibly in a period during which many vehicles pass through the point C in a concentrated manner.

On condition that there are 40 or more vehicles for which moving time is 15 to 20 minutes, as a service 4, played is an advertisement of company P whose play time is 10 minutes at user terminals 1 of said vehicles.

By this means, it is possible to provide an optimal advertisement to users in accordance with moving time.

On condition that there are 50 or more vehicles for which moving distances are 60 to 70 km, as a service 5, played is a movie whose play time is 100 minutes and which includes an advertisement of company Q to user terminals 1 of said vehicles.

By this means, it is possible to provide optimal content to users in accordance with moving distances.

On condition that there are 5 or more vehicles whose destinations are the same and whose arrival times are substantially the same, as a service 6, assigned is a teacher of an English conversation lesson to users of said vehicles.

By this means, it is possible to provide an English conversation group lesson which can be given within a period before arrival at the destination.

On condition that there are 60 or more vehicles for which the moving routes do not include a point D, but pass near the point D, as a service 7, presented are routes which pass through the point D to user terminals 1 of said vehicles and presents a coupon if the vehicles actually pass through the point D.

By this means, it is possible to encourage the vehicles to take a slight roundabout route and allow users who accept the roundabout route to receive a coupon.

In this manner, sharing of route information allows various service providing conditions to be set. As the service providing conditions, arbitrary information which can be included in the route information, such as a specific point (including an area), a period in which a vehicle reaches the specific point, a moving direction at the specific point, moving time, a moving distance, the number of vehicles, the number of users who utilize a vehicle, attributes, and moving purpose can be set. Further, as the service providing conditions, conditions combined with information which is not included in the route information, such as weather, geographical information, and traffic jam information may be set.

Further, it is possible to provide various kinds of service by assuming automated driving. Service content can include play of content, provision of coupons, play of advertisements, provision of English conversation lessons, provision of Yoga lessons, and the like. The service content is preferably suitable for (related to) the service providing conditions. Further, the service content can be made to vary in accordance with a location where a moving unit moves, a route, a moving purpose, the number of fellow passengers, weather/climate conditions, interior conditions of the moving unit, attribute information (such as economic information and health information) of users who get on the moving unit, commercial facilities on the moving route, tourism resources such as historic sights, government and public offices, situations of other means of transportation, and the like.

There can be various forms of service provision. Typically, service can be provided using the display 15 of the user terminal 1 as a medium. In this case, data such as content to be played on the display 15 may be streamed from the service providing means 24 of the service providing device 2 to the user terminal 1. Alternatively, a plurality of pieces of content may be stored in the content storage means 16 of the user terminal 1, and a play command which designates content to be played may be transmitted from the service providing means 24 of the service providing device 2 to the user terminal 1.

Further, service can also be provided using a player device 60 which is different from the user terminal 1 as a medium like a digital signage, a billboard, an outdoor advertisement, a commercial facility or other arbitrary information transmission means. In this case, data such as content to be played at the player device 60 would be better distributed from the service providing means 24 of the service providing device 2 to the player device 60 at a timing at which a vehicle on which the user for whom service is to be provided gets approaches the player device 60.

As other forms of service provision, a specific article may be provided to a user at a specific point. Further, service may be provided in a form which is a combination of a plurality of forms.

Service may be unilaterally provided from the service providing device 2 to the user terminal 1. Alternatively, an offer of service provision may be made from the service providing device 2 to the user terminal 1. In this case, service may be provided only by a user who uses the user terminal 1 accepting the offer or may be provided by the user paying a charge. The charge may be paid with money or may be canceled out by viewing/listening an advertisement. Further, an offer may be made from the user terminal 1 to the service providing device 2.

Each kind of service may be delivered through bidding at an auction at price in accordance with service providing conditions and service content. The bid price is set higher, for example, as the number of vehicles in the service providing conditions is larger or moving time is longer. Further, sharing of the route information makes it possible to grasp moving time of each vehicle. It is therefore possible to automatically calculate optimal advertisement delivery time and service providing conditions on the basis of the route information. Further, it is possible to deliver service (particularly, advertisements) flexibly targeting users while spare time is regarded as spots.

It is assumed in service provision (particularly, content delivery) that authentication is performed using a block chain in which information of traffic lights and weather information are combined through distributed computing as well as using IDs of vehicles and IDs of users.

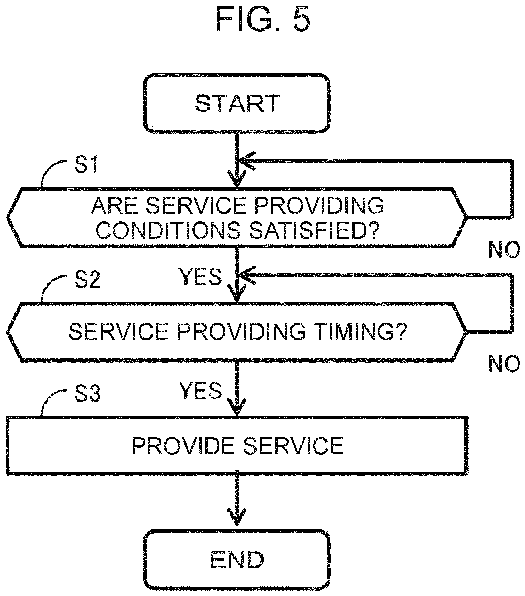

FIG. 5 is a flow chart showing an exemplary process operation of the service providing device 2. Although not shown, when the user terminal 1 in the vehicle transmits route information, the route information receivingmeans 22 of the service providing device 2 receives route information and registers it in the route information storage means 23. In addition, the position information receiving means 21 of service providing device 2 sequentially receives the position information indicating the current position of each vehicle from the user terminal 1.

In step S1, the service providing means 24 of the service providing device 2 determines whether any service provision conditions in the service storage means 25 are satisfied each time the route information is received, or periodically. If so, the service providing means 24 identifies service providing target and service providing timing.

For example, when the service provision condition of the service 1 of FIG. 4 is satisfied, the provision target is the user terminal 1 of vehicle whose moving route includes the point A, and the provision timings are when the respective vehicle pass in the vicinity of the point A. When the service provision condition of the service 3 is satisfied, the provision target is the digital signage installed at the point C, and the providing timing is a time period when 30 or more vehicles pass through the point C.

In step S2, the service providing means 24 determines whether it is timing to provide services. If it is determined that the service is to be provided, the service providing means 24 provides the service to the providing target in step S3.

For example, when the service provision condition of the service 1 of FIG. 4 is satisfied, the service providing means 24 monitors the position information from vehicle on which the user using the user terminal 1 which is the service providing target rides, and causes the advertisement to be played when vehicle approaches the point A (the vehicle falls within the range determined based on the point A). In addition, when the service provision condition of the service 3 is satisfied, the service providing means 24 distributes the advertisement to the digital signage at the timing of the corresponding time zone.

As described above, in the present embodiment, the route information of a plurality of vehicles is shared. When a certain condition is satisfied by the route information from a plurality of vehicle, service corresponding to the condition is provided. Therefore, interrelationships between vehicle can be utilized, and services can be efficiently provided. In addition, since optimum information can be distributed based on dynamic movement information of a plurality of moving units, not only efficient information provision is performed, but also by accumulating these past data, information provision in individual moving units or in a specific geographic space can be made efficient.

In the present embodiment, vehicle having the auto operation function is exemplified, but the present invention can be applied not only on vehicle, but on any moving unit that can autonomously operate without a direct manipulation by a human being. In addition, although the user of the present invention is assumed to be a business operator who transports articles using an automatic drive vehicle, a business operator who arranges an automatic drive vehicle in an area, a business operator who sells or eats or drinks with an automatic drive vehicle, a police or other administrative organ which performs traffic control, or an infrastructure administrator such as a road, the present invention is not limited thereto.

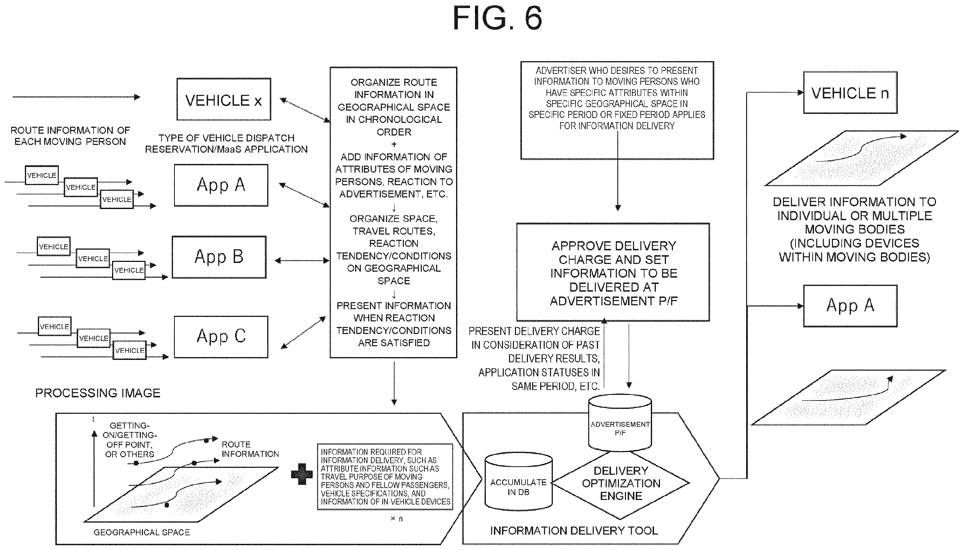

As described above, as illustrated in Figure 6, the present technique has features of collecting past route information and behavior results on specific geographical space during moving (this will be referred to as route information) from a plurality of moving units in chronological order, organizing information of passengers and moving people who are related to the respective pieces of the route information, various kinds of service which are provided to fellow passengers or which are provided within a vehicle, service information (this will be referred to as attribute information) provided before and after moving, and the like, on geographical space in chronological order, computing relationship between the route information and the attribute information using a statistical method, learning the result of computation, thereby providing expected information to individual users or a plurality of users in accordance with whether there is a large or small amount of the information and feature points when new route information and attribute information for which the number of feature points which match feature points of the accumulated route information is equal to or larger than a given number are input (regardless of whether individually or in plurality).

In Figure 6, a person (which will be referred to as an advertiser for descriptive purpose) who desires to deliver information such as advertisements to a specific area or target selects delivery conditions (such as an area, a route, a moving unit or combination thereof, a period, whether or not to repeat, a frequency of repetition, target attributes (such as gender, age and moving purpose), and a type of a delivery device within the moving unit), and sets the delivery conditions as desired delivery conditions. The advertisement P/F calculates a delivery charge (which can also be referred to as a medium cost) under fixed conditions (which can include any method using a fixed amount, an auction and price which is variable within a fixed range in accordance with supply and demand) on the basis of past delivery results and application statuses in the same period through a delivery optimization engine, and presents the delivery charge to the advertiser. The advertiser approves delivery in a case where the advertiser satisfies the charge, and uploads necessary delivery materials to the advertisement P/F. The delivery optimization engine extracts delivery information from the advertisement P/F for a moving unit which matches the desired conditions of the advertiser on the basis of the route information accumulated by the delivery optimization engine and attribute information and performs information computation processing of delivering the information. Analysis and optimization of a transfer state (such as a route, a moving purpose and attribute information) using a statistical method as pre-processing for efficiently delivering the information to the desired location and route, instead of simply delivering the information to the desired location and route, is important to improve efficiency of information delivery. The route information and the attribute information of the moving unit, which are to be input, could not be stably obtained so far, that is, there was a case where the information could be obtained or a case where the information could not be obtained depending on different transfer events. However, as a result of emergence of a moving unit which can autonomously move, efficiency of such data collection is improved in the sense that it increases a possibility that a moving person sets a destination including a moving route to cause a vehicle to move, and provides attribute information such as a moving purpose to utilize the moving unit when the vehicle is dispatched, or the like. The present technique optimizes information delivery which fits such automated moving generation.

In this manner, according to the technique illustrated in Figure 6, by collecting the moving route information collected using the above-described method and information (attribute information) for each moving route regarding the number of people who moves on the moving unit, what kinds of people moves, and moving reason, and the like, it is possible to realize a computing device which evaluates a certain area on geographical space through multiplication with the attribute information, a specific period, or the like, evaluate respective pieces of geographical space to utilize the space as an advertising medium, and instruct the moving unit, or the like, to display an advertisement.

A supplement will be provided below to describe what kind of state is desired to be achieved by sharing the route information. Particularly, a technique of delivering appropriate service information such as an advertisement on the basis of a moving route of an autonomous driving vehicle enables the moving route including change along the way to be known in advance by the autonomous driving vehicle, increases free time within the moving unit and facilitates cooperation operation between vehicles.

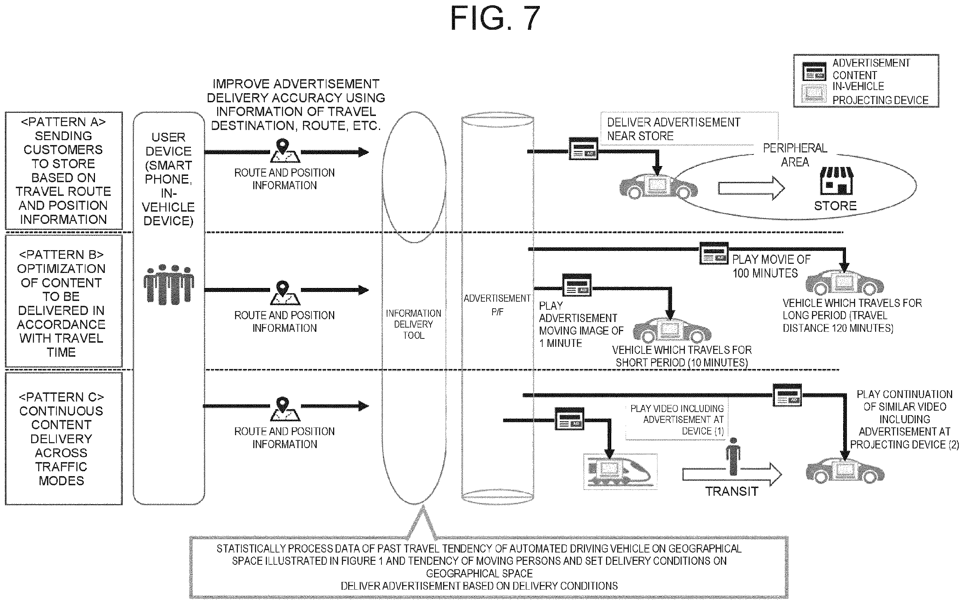

Figure 7 schematically illustrates an example of a use case of the present technique. Note that a user device and an information delivery tool in Figure 7 respectively correspond to the user terminal 1 and the service providing device 2 in Figure 1.

In Figure 7, the information delivery tool collects the route information and the position information from a plurality of user devices. Then, the information delivery tool statistically processes data of past moving tendency of the autonomous driving vehicle on geographical space and tendency of the moving person, sets delivery conditions on geographical space and delivers advertisements on the basis of the delivery conditions.

More specifically, it is assumed that starting and end points are set on certain geographical space, and information of a route set through a car navigation, or the like, is obtained from a vehicle. In a case where conditions set by an advertiser or a content holder who desires to deliver information such as an advertisement in a case where a route is generated which passes through an event and a specific range of geographical space with reference to past events on the geographical space including the route, are satisfied, various kinds of information are delivered to a device within the vehicle.

As position information of each user, a current location can be obtained from a GPS. Concerning moving time, whether or not time is prioritized is estimated from the past route information and attribute information (moving purpose), a traffic mode is estimated from vehicle dispatch application, or the like, and the past moving pattern on the same geographical space which is closest to the moving pattern of the route information is identified. Then, it is possible to execute a handling method which has derived the closest result frompoints in common with the closest moving pattern, points in common with other moving patterns, and the like.

Specific examples of information to be delivered include sending customers to a store based on the moving route and position information (pattern A in Figure 7), which corresponds to service 1 and service 2 in Figure 4. Another example includes optimization of content to be delivered in accordance with moving time (pattern B in Figure 7), which corresponds to service 5 in Figure 4.

Still another example includes continuous content delivery across traffic modes (pattern C in Figure 7) . In this pattern C, in a case where a plurality of moving units which are not the same moving unit are used on one route like Mobility as a service (Maas) application, information can be delivered in chronological order while combination of the moving units is incorporated on geographical space as route information, and change of the moving means is traced for moving information which includes a route having starting and end points which are the same as or close to those in the pattern and which includes attribute information having close elements.

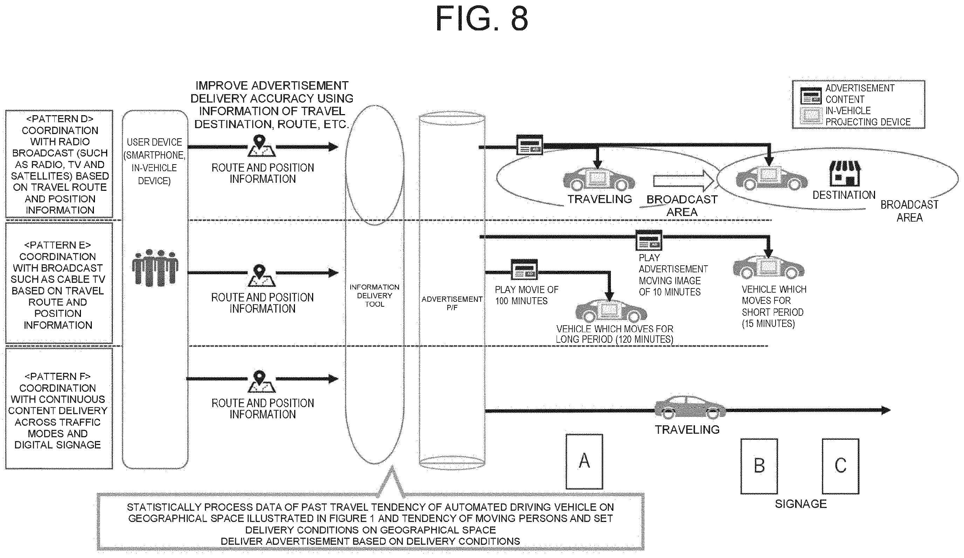

Figure 8 schematically illustrates another example of the use case of the present technique. A difference from Figure 7 will be mainly described below. In Figure 8, a function of coordinating commercials with TV programs is performed on the basis of information obtained from an aggregate. As provided content, advertisement information during moving is preferably delivered in accordance with individual moving persons on the basis of attributes, moving purposes, moving routes, and the like, of the moving persons in combination with moving statuses and TV viewing rating, radio listening rating, and the like, within an area, or the same information is preferably provided to a moving group which satisfies specific conditions.

Specific examples of information to be delivered include coordination with radio broadcast (such as a radio, a TV and satellites) based on the moving route and the position information (pattern D in Figure 8) . In this pattern D, it is possible to switch and deliver advertisements and information of a program in a broadcast area in which the vehicle is moving in accordance with a destination and a route, or deliver content to be delivered in a broadcast area of the destination also in a broadcast area in which the vehicle is moving.

Another example includes coordination with broadcast such as a cable TV based on the moving route and the position information (pattern E in Figure 8).

Still another example includes coordination with continuous content delivery across traffic modes and a digital signage (pattern F in Figure 8) . In other words, in the present example, in a case where individual vehicles for which moving routes are known in advance through automated driving have moving characteristics which match tendency analyzed through route sharing in advance, and in a case where it is known that a plurality of such vehicles approach, it is possible to display an advertisement which is appealing to these vehicles at a signage in advance or make display coordinate with display of other signage in a relay manner, or the like.

Specifically, as described above, it can be grasped that a pattern having peculiar points obtained from a specific route and attributes through multiplication of the attribute information and the route information has specific tendency and characteristics. For example, assuming that there is a station with a parking lot, and a nursery school is located near the station, in a case where vehicles from areas around the nursery school concentrate in specific hours in the morning, the route information includes routes from individual homes to the parking lot at the station by way of the nursery school, and the attribute information includes the number of people in the nursery school and the number of people who get on respective moving units, and family structures obtained from other moving. As a result of such situations being associated through deep learning, it is possible to grasp tendency which is analyzed through route sharing in advance and transfer characteristics.

While this pattern F corresponds to service 3 in Figure 4, it is also possible to coordinate a plurality of kinds of digital signage in a relay manner.

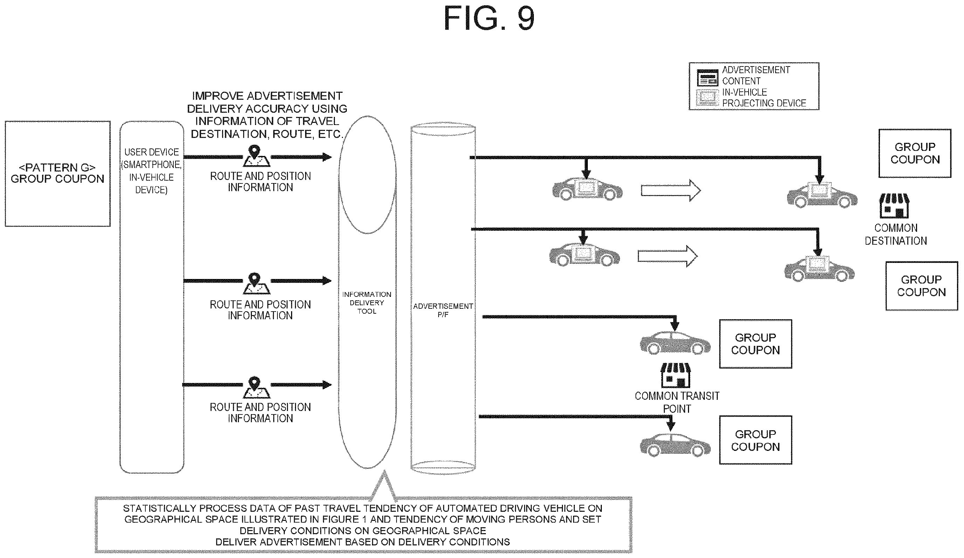

Figure 9 schematically illustrates still another example of the use case of the present technique, which corresponds to service 2 in Figure 4. A coupon which is issued if people of the number equal to or larger than a predetermined number come to a destination when it is proved that the people head to the common destination, will be referred to as a group coupon. Whether or not the group coupon can be used may be arbitrarily set by an advertiser such that the coupon can be used if all the people to whom the group coupon is issued arrive or the coupon can be used if the destination is set even if the people do not actually come, or the coupon can be used if people of the number equal to or larger than a fixed number set a destination or a transit point within a fixed period.

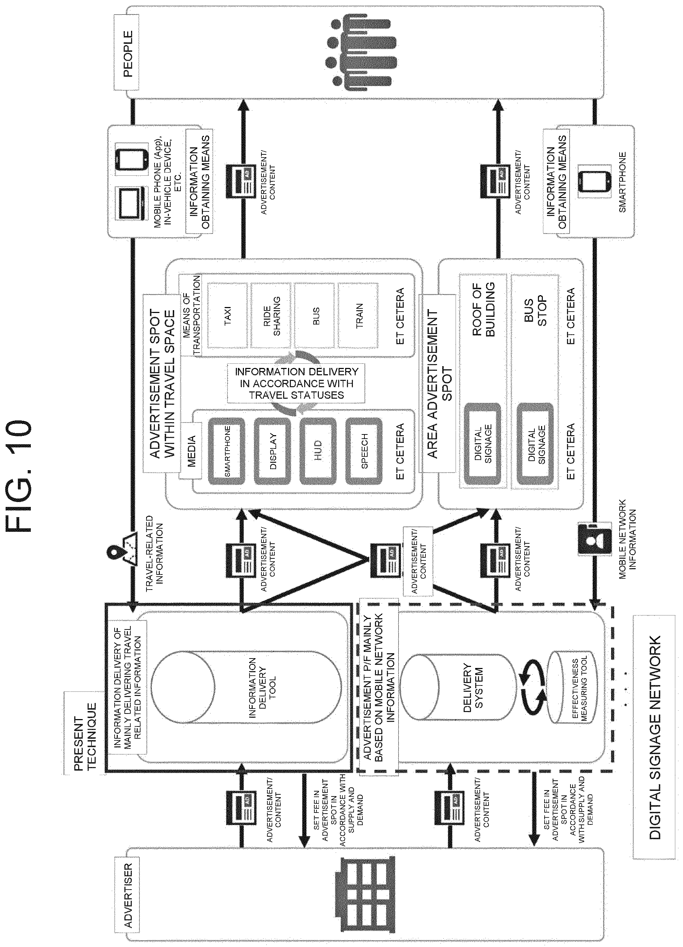

Figure 10 schematically illustrates a mechanism of coordination with digital signage. As illustrated in Figure 10, it is possible to achieve coordination with a network which bundles a plurality of kinds of digital signage. It is possible to provide various kinds of service to devices which are not limited to specific devices within moving space.

The above-described embodiments have been described in order to enable any person having ordinary skill in the art to which the present invention pertains to practice the present invention. Various modifications of the above embodiment can be naturally made by those skilled in the art, and the technical idea of the present invention can be applied to other embodiments . Accordingly, the present invention is not to be limited to the embodiments described, but is to be accorded the widest scope consistent with the concepts defined by the appended claims.

### [Description of Symbols]

- 1: user terminal
- 11: position information obtaining means
- 12: route information setting means
- 13: communication means
- 14: service providing means
- 15: display
- 16: content storage means
- 2: service providing device
- 2A: route share server
- 2B: service managing server
- 21: position information receiving means
- 22: route information receiving means
- 23: route information storage means
- 24: service providing means
- 25: service storage means
- 60: player device

## Claims

1. A service providing device comprising:
a route information receiving means that receives route information indicative of respective moving route of each of plurality of moving units each of which comprises auto operation function;
a position information receiving means that receives position information indicative of current position of each of the plurality of moving units; and
a service providing means that, when a service providing condition is satisfied by the route information from two or more moving units among the plurality of moving units, provides a service to users of the two or more moving units based on the rout information and the position information.

2. The service providing device of claim 1, wherein the service providing condition is that the moving route of the moving units includes a predetermined certain point.

3. The service providing device of claim 2, wherein the service providing means provides the service, based on the position information, at a timing when the moving units enter a range defined by the certain point.

4. The service providing device of claim 2 or 3, the service providing means provides, as the service,
an advertisement relating to a shop relating to the certain point, or
a coupon available at a shop relating to the certain point.

5. The service providing device of claim 2 or 3, wherein the service providing means provides the service utilizing a player device viewable from the moving units at the certain point, the player device being located near the certain point.

6. The service providing device of one of claims 2 to 5, wherein the service providing condition is that a number of the moving units whose moving route includes the certain point is equal to or more than a predetermined number.

7. The service providing device of one of claims 1 to 6, wherein
the service providing condition relates to
a moving time in the moving route or
a moving distance in the moving route, and
the service providing means provides a service dependent on the moving time or the moving distance.

8. The service providing device of one of claims 1 to 7, wherein the service providing condition is that two or more moving units have a common destination.

9. The service providing device of one of claims 1 to 8, wherein the service providing condition relates to a number and/or an attribute information of users using the moving units.

10. The service providing device of one of claims 1 to 9, wherein
the service provided by the service providing means is playing a content, and
the service providing means causes the content to be played by sending the content to a user terminal used by the user.

11. The service providing device of one of claims 1 to 9, wherein
the service provided by the service providing means is playing a content, and
the service providing means causes the content stored in a user terminal in advance to be played by sending a playing command to the user terminal used by the user.

12. A service providing method comprising:
by a route information receiving means, receiving route information indicative of respective moving route of each of plurality of moving units each of which comprises auto operation function;
by a position information receiving means, receiving position information indicative of current position of each of the plurality of moving units; and
by a service providing means, when a service providing condition is satisfied by the route information from two or more moving units among the plurality of moving units, providing a service to users of the two or more moving units based on the rout information and the position information.

13. A service providing program causing a computer to function as
a route information receiving means that receives route information indicative of respective moving route of each of plurality of moving units each of which comprises auto operation function;
a position information receiving means that receives position information indicative of current position of each of the plurality of moving units; and
a service providing means that, when a service providing condition is satisfied by the route information from two or more moving units among the plurality of moving units, provide a service to users of the two or more moving units based on the rout information and the position information.

14. A computing device comprising:
a means that receives route information indicative of respective moving route of each of plurality of moving units each of which comprises auto operation function;
a means that evaluates a certain area on a geographic space based on multiplication with attribute information and a certain time etc. by collecting attribute information of each moving route; and
a means that instruct advertisement display by evaluating each geographic space to utilize the each geographic space as an advertisement medium.

15. The computing device of claim 14, wherein the attribute information includes information regarding, for each moving route, a number of people in the moving unit, what kind of person with what reason in the moving unit.
